# EUROPÄISCHE PATENTSCHRIFT

(11) **EP 2 613 463 B1**
(45) Veröffentlichungstag und Bekanntmachung des Hinweises auf die Patenterteilung: **30.08.2017**
(21) Anmeldenummer: 12007208.7
(22) Anmeldetag: 18.10.2012
(51) Int. Cl.: H04B 17/00

(54) **VERFAHREN ZUR ÜBERWACHUNG EINES TRANSMITTERS UND ENTSPRECHENDER TRANSMITTER**
METHOD FOR MONITORING A TRANSMITTER AND CORRESPONDING TRANSMITTER
PROCÉDÉ DESTINÉ À LA SURVEILLANCE D'UN ÉMETTEUR ET ÉMETTEUR CORRESPONDANT

(30) Priorität: 09.01.2012 DE 102012000187
(43) Veröffentlichungstag der Anmeldung: 10.07.2013
(73) Patentinhaber: Krohne Messtechnik GmbH, 47058 Duisburg (DE)
(72) Erfinder: Pichot, Vincent, 26100 Romans sur Isere (FR)
(74) Vertreter: Gesthuysen Patent- und Rechtsanwälte

(56) Entgegenhaltungen:
- US-A1- 2002 082 799
- US-A1- 2005 113 942

## Beschreibung

Die Erfindung betrifft ein Verfahren zur Überwachung eines Transmitters. Dabei umfasst der Transmitter mindestens eine Messeinheit und eine Übertragungseinheit. Die Messeinheit und die Übertragungseinheit sind zumindest zur Übertragung von Signalen miteinander verbunden. Die Messeinheit dient dazu, mindestens eine Messgröße zu ermitteln und ein davon abhängiges Messsignal zu erzeugen. Die Übertragungseinheit empfängt von der Messeinheit das Messsignal und dient dazu, ausgehend von dem Messsignal ein Ausgangssignal an mindestens ein Signalübertragungselement zu übergeben. Die Erfindung betrifft ferner einen entsprechenden Transmitter, welcher mindestens eine Messeinheit und eine Übertragungseinheit umfasst.

Transmitter - alternative Bezeichnungen sind Messumformer oder Feldgeräte - der vorgenannten Art sind seit längerem bekannt und dienen ganz allgemein dazu, das von einer Sensoreinheit oder einem Sensorelement stammende primäre Sensorsignal zu erfassen und in ein - meist standardisiertes - Signal als elektrisches Ausgangssignal umzusetzen, damit es beispielsweise von einer übergeordneten Prozessüberwachungs- oder -steuerungseinheit verwendet werden kann.

Der Begriff Transmitter ist hier nicht in irgendeiner Weise einschränkend zu verstehen. Die Sensoreinheit kann insbesondere der Messung von physikalischen oder chemischen Messgrößen dienen, z. B. Durchfluss, Massedurchfluss, Druck, Temperatur, Füllstand, pH-Wert usw. Ein solcher Transmitter lässt sich für die allgemeine Betrachtung zumindest in zwei Teile gliedern: in eine Messeinheit, die der Messung an sich dient und die ein aus der Messung sich ergebendes Messsignal zur Verfügung stellt, und in eine Übertragungseinheit, die das Messsignal empfängt und z. B. über einen Feldbus an eine übergeordnete Einheit übermittelt. Somit erfüllt der eine Teil des Transmitters die Aufgabe der eigentlichen Messung und der andere Teil des Transmitters kommuniziert den bei der Messung gewonnen Messwert oder ggf. die gewonnenen Messwerte an weitere Einheiten.

Je nach Anwendungsfall müssen die Transmitter unterschiedlichen Sicherheitsanforderungen genügen. So müssen insbesondere mögliche Fehlerquellen erkannt und ggf. Sicherheitsmaßnahmen vorgesehen werden. Für Fehler kritische Bereiche sind beispielsweise die Messung selbst, die Signal- bzw. Datenverarbeitung im Transmitter und auch die Kommunikation mit z. B. dem Transmitter übergeordneten Einheiten. Um den jeweiligen Sicherheitsanforderungen, beispielsweise dem insbesondere in der Prozessautomatisierung wichtigen SIL (Safety Integrity Level)-Standard zu genügen, muss beispielsweise Redundanz oder Diversität bei den Transmittern vorgesehen sein. Redundanz bedeutet dabei eine doppelte oder mehrfache Auslegung von sicherheitsrelevanten Komponenten. Diversität bedeutet, dass die verwendeten Hardware-Komponenten bzw. Software-Programme von unterschiedlichen Herstellern stammen bzw. von unterschiedlichem Typ sind. Sowohl redundante als auch diversitäre Ausgestaltungen sind meist umständlich und/oder kostenintensiv.

Beispielsweise offenbart die Schrift EP 1 466 308 B1 eine Sensoranordnung mit einem Messaufnehmer, der ein Rohsignal erzeugt, und mit einer Ausgangsstufe, welche ein Ausgangssignal ausgibt. Dabei findet zwischen dem Messaufnehmer und der Ausgangsstufe eine Übertragung und Umwandlung des Rohsignals in das Ausgangssignal statt. Eine zusätzliche Überwachungseinheit erzeugt aus dem Rohsignal ein Hilfssignal und vergleicht dieses mit dem Ausgangssignal, um Abweichungen über einen vorbestimmten Rahmen hinaus zu signalisieren. Nachteilig ist daran, dass eine zweite Einheit zum Verarbeiten des Rohsignals vorgesehen sein muss. Gleichzeitig wird so nur der Signalweg innerhalb des Transmitters überwacht. Die Schrift US2002/0082799 A1 offenbart einen Transmitter, wobei der Transmitter eine Messeinheit und eine Übertragungseinheit umfasst. Eine für die Beurteilung eines Transmitters in Hinblick auf die Sicherheit relevante Größe ist die Safe Failure Fraction (SFF), die aussagt, wie groß der Anteil der ungefährlichen Fehler an den insgesamt möglichen Fehlern ist. Ein ungefährlicher Fehler ist dabei ein Fehler, welcher zwar für die Sicherheit relevant ist, welcher jedoch entweder erkannt wird oder den Transmitter in einen sicheren Zustand überführt.
Der Erfindung liegt daher die Aufgabe zugrunde, ein Verfahren zur Überwachung eines Transmitters - und einen entsprechenden Transmitter- anzugeben, das die Safe Failure Fraction bei dem betreffenden Transmitter erhöht.

Das erfindungsgemäße Verfahren, bei dem die zuvor hergeleitete und aufgezeigte Aufgabe gelöst ist, ist zunächst und im Wesentlichen durch folgende Schritte gekennzeichnet: Von der Übertragungseinheit wird von dem Signalübertragungselement ein Eingangssignal abgenommen und von der Übertragungseinheit wird eine Ermittlung der Messgröße durch die Messeinheit veranlasst. Die Übertragungseinheit übermittelt an die Messeinheit mindestens ein mit dem Eingangssignal korrespondierendes Vergleichssignal. Von der Messeinheit wird durch Vergleich des Vergleichssignals mit einem abgespeicherten Signal ein Vergleichsergebnis ermittelt, und von der Messeinheit wird in Abhängigkeit von dem Vergleichsergebnis entweder in einem Fall das in Folge der Ermittlung der Messgröße erzeugte Messsignal an die Übertragungseinheit übermittelt oder es wird im anderen Fall die Übertragungseinheit in einen vorgebbaren Zustand versetzt und/oder an die Übertragungseinheit ein Fehlersignal übermittelt.

In dem erfindungsgemäßen Verfahren wird somit von der Übertragungseinheit ein Eingangssignal von dem Signalübertragungselement abgenommen, weiterhin veranlasst sie die Ermittlung der Messgröße durch die Messeinheit und sie übermittelt ein von dem abgenommenen Eingangssignal abhängiges Vergleichssignal an die Messeinheit. Das Übermitteln des Vergleichssignals kann dabei auch das Auslösen der Messung durch die Messeinheit beinhalten. Alternativ kann dies jedoch auch separat von der Übermittlung des Vergleichssignals stattfinden. In einer Ausgestaltung entspricht das Vergleichssignal im Wesentlichen einem Messsignal, welches von der Übertragungseinheit als ein solches Ausgangssignal an das Signalübertragungselement übergeben werden würde, welches identisch mit dem abgenommenen Eingangssignal ist.

Das Signalübertragungselement ist beispielsweise eine Schnittstelle eines Feldbusses oder eine Zweileiter-Anschlussstelle oder eine beliebige Art eines Feldbusses selbst oder ein beliebiges Kommunikations- bzw. Leitungselement für ein z. B. 4..20 mA-Signal. In einem Beispiel handelt es sich um einen elektrischen Leiter. Die Art oder Ausgestaltung des Signalübertragungselements hat jedoch keine Auswirkungen auf die Erfindung und ist nur ein Element, an welches die Übertragungseinheit das Ausgangssignal übergibt bzw. von welchem es das Eingangssignal empfängt bzw. abgreift. Somit kann es sich beispielsweise auch um eine drahtlose Funkverbindung handeln.

Die Messeinheit führt die eigentliche Messung durch und übermittelt unter einer nachfolgend beschriebenen Bedingung das sich aus der Messung ergebende Messsignal an die Übertragungseinheit. Weiterhin empfängt die Messeinheit das Vergleichssignal und vergleicht es mit einem hinterlegten bzw. abgespeicherten Signal. Ausgehend von einem sich daraus ergebenden Vergleichsergebnis übergibt die Messeinheit das Messsignal an die Übertragungseinheit oder sie versetzt die Übertragungseinheit in einen vorgebbaren, d. h. vorzugsweise sicheren Zustand bzw. übermittelt an die Übertragungseinheit ein Fehlersignal.

Vorzugsweise führt ein positives Vergleichsergebnis dazu, dass das Messsignal an die Übertragungseinheit übermittelt wird. "Positives Vergleichsergebnis" bedeutet in diesem Zusammenhang, dass das Vergleichssignal und das abgespeicherte Signal in einem solchen Zusammenhang stehen, dass das Vergleichssignal den "Erwartungen" entspricht, wie sie das abgespeicherte Signal widerspiegelt. Ein "negatives Vergleichsergebnis" bedeutet, dass an mindestens einer Stelle der Übertragungskette ein Fehler aufgetreten ist, dass also das Vergleichssignal - z. B. über einen vorgebbaren Toleranzbereich hinaus - nicht dem entspricht, was es sein sollte. Alternativ könnte auch ein Fehler dadurch auftreten, dass das vorhergehende Messsignal nicht richtig abgespeichert worden ist oder dass an der Speicherstelle ein Fehler auftrat. Tritt eine solche Abweichung auf, so wird entweder die Übertragungseinheit in einen vorgebbaren Zustand, z. B. in einen abgesicherten Zustand versetzt, oder die Messeinheit übermittelt der Übertragungseinheit ein Fehlersignal. Versetzt die Messeinheit die Übertragungseinheit in einen vorgebbaren Zustand, so kann dadurch auch eine weitere Kommunikation bzgl. des Fehlers zwischen Messeinheit und Übertragungseinheit entfallen bzw. der Transmitter an sich benötigt keine explizite Fehlersignalisierung in Richtung einer nach- oder übergeordneten Einheit, da das Vorliegen eines Fehlers bereits an seinem Zustand, z. B. an seinem Ladungszustand ablesbar ist.

Vorteilhaft an dem erfindungsgemäßen Verfahren ist, dass die Messeinheit selbst einen Test auf das Vorliegen eines Fehlers vornimmt und dass nicht eine weitere Einheit vorgesehen sein muss. Damit ergibt sich ein kompakter und kostensparsamer Aufbau. Weiterhin erlaubt es das Verfahren, auch einen Blick aus dem Transmitter heraus zu werfen, indem das Eingangssignal von dem Signalübertragungselement abgegriffen wird und somit auch festgestellt wird, ob das Signalübertragungselement das richtige Signal trägt bzw. ob nach der vorhergehenden Messung das richtige Signal beim Signalübertragungselement angekommen war.

Eine vorteilhafte Ausgestaltung sieht vor, dass von der Messeinheit das erzeugte Messsignal in dem Fall an die Übertragungseinheit übermittelt und auch das erzeugte, d. h. aktuelle Messsignal abspeichert wird, wenn das Vergleichsergebnis darin besteht, dass das Vergleichssignal und das abgespeicherte Signal innerhalb eines vorgebbaren Toleranzbereichs liegen. Je nach Art der zulässigen Schwankungen oder Störungen kann dabei der Toleranzbereich größer oder kleiner vorgegeben werden. In einer Ausgestaltung ist insbesondere vorgesehen, dass das Vergleichssignal und das abgespeicherte Signal im Wesentlichen identisch zu sein haben. Insgesamt führt jedoch der Zustand, dass sich das Vergleichssignal und das abgespeicherte Signal entsprechen dazu, dass das Messsignal an die Übertragungseinheit übergeben und somit für die weitere Ausgabe freigegeben wird und dass das Messsignal für die nächste Messung und damit auch für den nächsten Vergleich mit dem Vergleichssignal abgespeichert wird. Somit hält die Messeinheit jeweils das vorhergehende Messsignal vor und generiert ein aktuelles Messsignal. In einer alternativen Ausgestaltung wird das aktuelle Messsignal z. B. von der Übertragungseinheit abgespeichert.

In einer weiteren Ausgestaltung ist eine zusätzliche Fehlerüberwachung dergestalt vorgesehen, dass die Übertragungseinheit das Signalübertragungselement in einen vorgebbaren Zustand versetzt und/oder an das Signalübertragungselement ein Fehlersignal übermittelt, wenn der Zeitpunkt der Ermittlung der Messgröße und/oder die Übermittlung des Messsignals durch die Messeinheit außerhalb eines vorgebbaren Zeitfensters liegen/liegt. In dieser Ausgestaltung wird die Messung bzw. die Übergabe des Messsignals mit einem Zeitstempel versehen. Liegt der Messzeitpunkt oder der Moment der Übergabe des Messsignals außerhalb eines vorgebbaren Zeitintervalls, so erkennt dies die Übertragungseinheit und löst daraufhin ein Fehlersignal aus oder versetzt das Signalübertragungselement in einen vorgebbaren, d. h. insbesondere sicheren Zustand. Hiermit wird also erkannt, dass die Messung oder die Übermittlung des Messsignals zu lange gedauert hat.

Eine Ausgestaltung des erfindungsgemäßen Verfahrens bezieht sich auf den Fall einer Abweichung zwischen dem Vergleichssignal und dem abgespeicherten Signal, wobei dieses negative Vergleichsergebnis dazu führt, dass von der Messeinheit die Übertragungseinheit in einen vorgebbaren Zustand versetzt und/oder an die Übertragungseinheit ein Fehlersignal übermittelt wird, indem von der Messeinheit auf eine Verbindungsleitung eingewirkt wird, welche einer Energieversorgung der Messeinheit durch die Übertragungseinheit dient. In dieser Ausgestaltung versorgt die Übertragungseinheit die Messeinheit über eine Verbindungsleitung mit Energie.

Im negativen Vergleichsfall wirkt die Messeinheit auf die Verbindungsleitung ein, indem sie beispielsweise einen Energiebedarf einstellt, welcher außerhalb des Normalbereichs liegt oder indem sie wiederum einen solchen Energiezustand in der Übertragungseinheit hervorruft, welcher sich vom Normalzustand oder einem normalen Verhalten der Übertragungseinheit unterscheidet. Dies lässt sich insbesondere vorteilhafterweise von einer dem Transmitter übergeordneten Einheit erkennen und z. B. als Fehler interpretieren. Entzieht die Messeinheit der Übertragungseinheit insbesondere Energie, so zwingt sie vorteilhafterweise die Übertragungseinheit in einen sicheren, d. h. energielosen oder zumindest energieärmeren Zustand relativ zum Normalbetrieb. Mit dieser Ausgestaltung geht die besonders vorteilhafte Variante einher, dass über die Verbindungsleitung der Ladezustand der Übertragungseinheit so beeinflusst wird, dass eine Ladezustandsüberwachung der Übertragungseinheit einen Ladezustandsfehler detektiert. In dieser Ausgestaltung beeinflusst die Messeinheit den Ladezustand der Übertragungseinheit derartig, dass dies bei einer Überwachung des Ladezustands als Fehler erkannt wird. Verfügt die Übertragungseinheit beispielsweise über einen Kondensator zur Ladungsspeicherung und entlädt die Messeinheit im Fehlerfall den Kondensator mit einer deutlich anderen Zeitkonstanten als sie im Normalfall bei dem Kondensator auftritt, so kann dies für die Erkennung des Fehlers bzw. für dessen Signalisierung verwendet werden und ist insbesondere auch offensichtlich für eine weitere dem Transmitter nach- oder übergeordnete Einheit, welche beispielsweise die Übertragungseinheit mit Energie versorgt oder die deren Ladungszustand überwacht.

Die zuvor hergeleitete und aufgezeigte Aufgabe ist nach einer weiteren Lehre der Erfindung bei dem eingangs genannten, insbesondere sicherheitstechnischen oder sicherheitsrelevanten Transmitter dadurch gelöst, dass die Übertragungseinheit zum Übertragen von elektrischen Ausgangssignalen an das Signalübertragungselement und zur Abnahme von elektrischen Eingangssignalen von dem Signalübertragungselement ausgestaltet ist. Zudem sind die Übertragungseinheit und die Messeinheit derartig ausgestaltet und aufeinander abgestimmt, dass die Übertragungseinheit eine Ermittlung der Messgröße durch die Messeinheit veranlasst und dass die Übertragungseinheit an die Messeinheit mindestens ein von dem Eingangssignal abhängiges Vergleichssignal übermittelt. Die Messeinheit ist zum Übertragen des Messsignals an die Übertragungseinheit und zum Empfangen des Vergleichssignals von der Übertragungseinheit ausgestaltet. Weiterhin weist die Messeinheit mindestens eine Vergleichseinheit auf, welche durch Vergleich des Vergleichssignals mit einem in einer Speichereinheit abgespeicherten Signal ein Vergleichsergebnis ermittelt. Schließlich sind die Übertragungseinheit und die Messeinheit derartig ausgestaltet und aufeinander abgestimmt, dass die Messeinheit in Abhängigkeit von dem Vergleichsergebnis entweder das in Folge der Ermittlung der Messgröße erzeugte Messsignal an die Übertragungseinheit übermittelt oder die Übertragungseinheit in einen vorgebbaren Zustand versetzt und/oder an die Übertragungseinheit ein Fehlersignal übermittelt.

Die Messeinheit und die Übertragungseinheit des erfindungsgemäßen Transmitters zeichnen sich somit zumindest dadurch aus, dass sie elektrische Signale senden und auch empfangen. Für die Messeinheit bedeutet dies dabei das Senden in Richtung der Übertragungseinheit und das Empfangen eines elektrischen Signals von der Übertragungseinheit. Für die Übertragungseinheit bedeutet dies, dass sie elektrische Signale sendet und empfängt bezogen auf die Messeinheit und dass sie elektrische Signale sendet an die und empfängt von dem Signalübertragungselement. Die Übertragungseinheit sendet somit nicht nur ein Ausgangssignal an das Signalübertragungselement, sondern sie holt sich auch von dem Signalübertragungselement ein Eingangssignal - als Signal, welches das Signalübertragungselement vorzugsweise aktuell trägt - ab. Überdies wird von der Übertragungseinheit auch ein Signal an die Messeinheit übermittelt. Zusätzlich ist die Messeinheit mit einer gewissen Funktionalität dergestalt ausgerüstet, dass sie das von der Übertragungseinheit an sie gesendete Vergleichssignal mit einem abgespeicherten Signal vergleicht und ausgehend von dem Vergleichsergebnis zwischen Alternativen wählt. Ist das Ergebnis des Vergleichs positiv, d. h. passen das Vergleichssignal und das abgespeicherte Signal zueinander, so wird von der Messeinheit das Messsignal an die Übertragungseinheit übergeben. Ist das Ergebnis jedoch negativ, so wird von der Messeinheit ein Fehlersignal an die Übertragungseinheit übermittelt oder die Übertragungseinheit wird von der Messeinheit in einen vorgebbaren Zustand versetzt. Mit anderen Worten: die Messeinheit ist im erfindungsgemäßen Transmitter nicht nur eine Einheit zum Gewinnen von Messsignalen, sondern auch befähigt, auf die auf die Messeinheit zugreifende Übertragungseinheit einzuwirken. Insbesondere erkennt die Messeinheit Fehler der ihr nachgeordneten Signalkette, indem ihr der Wert zurückgeliefert wird, welcher im fehlerfreien Fall bei der vorherigen Messung von der Übertragungseinheit an das Signalübertragungselement ausgegeben worden war. Bei der Übertragungseinheit handelt es sich beispielsweise insbesondere um eine Konverteranordnung.

In einer Ausgestaltung ist vorgesehen, dass die Messeinheit mindestens eine Sensoreinheit für die Durchführung der eigentlichen Messung nach einer beliebigen Art des Standes der Technik, wie sie beispielsweise für Feldgeräte der Prozessautomatisierung bekannt sind, und die Speichereinheit aufweist. Weiterhin verfügt die Messeinheit beispielsweise über eine Vergleichseinheit zum Vergleichen von Signalen, welche in einer Ausgestaltung als Logikeinheit ausgeführt ist. Weiterhin ist beispielsweise in einer Variante auch mindestens eine Schnittstelle zum Senden und Empfangen von elektrischen Signalen vorgesehen. In der Messeinheit wird in einer Ausgestaltung auch aus einem eigentlichen Rohsignal, welches eine direkte Folge der Messung ist, zumindest ein Zwischensignal erzeugt. Weitere Verarbeitungs- und/oder Filterungsschritte können ebenfalls je nach Ausgestaltung in der Messeinheit realisiert sein. Die einzelnen Komponenten der Messeinheit können dabei auch zu größeren Komplexen zusammengeführt sein.

Eine Ausgestaltung des erfindungsgemäßen Transmitters sieht vor, dass mindestens eine Verbindungsleitung zur Übertragung von Energie zwischen der Messeinheit und der Übertragungseinheit besteht. Diese Verbindungsleitung wird insbesondere verwendet, um das Vorliegen eines Fehlers zu signalisieren bzw. um die Übertragungseinheit in einen vorgebbaren Zustand zu versetzen. Daher sieht auch eine damit verbundene Ausgestaltung vor, dass die Messeinheit die Übertragungseinheit in einen vorgebbaren Zustand versetzt und/oder an die Übertragungseinheit ein Fehlersignal übermittelt, indem die Messeinheit auf die Verbindungsleitung zur Übertragung von Energie einwirkt. Handelt es sich bei dem Transmitter beispielsweise um ein Zwei-Leiter-Messgerät, so wird durch die Messeinheit am Signalausgang der Übertragungseinheit, d. h. an der Zwei-Leiter-Schnittstelle des Signalübertragungselements beispielsweise im Fehlerfall, d. h. bei einem negativen Vergleichsergebnis ein solcher Strom- und/oder Spannungsverlauf oder ein solcher Wert eingestellt, wie er außerhalb der im Normalfall auftretenden Verläufe bzw. Werte liegt.

Die oben geschilderten Ausgestaltungen des erfindungsgemäßen Verfahrens können dabei auch in dem hier genannten erfindungsgemäßen Transmitter angewendet werden, d. h. die zum Verfahren gemachten Anmerkungen gelten hier entsprechend. Umgekehrt lassen sich auch die Ausgestaltungen des erfindungsgemäßen Transmitters beim Verfahren anwenden bzw. gelten auch die Anmerkungen entsprechend für die Realisierung im erfindungsgemäßen Verfahren.

Im Einzelnen gibt es nun eine Vielzahl von Möglichkeiten, das erfindungsgemäße Verfahren und den erfindungsgemäßen Transmitter auszugestalten und weiterzubilden. Dazu wird verwiesen einerseits auf die dem Patentanspruch 1 und dem Patentanspruch 6 nachgeordneten Patentansprüche, andererseits auf die folgende Beschreibung von Ausführungsbeispielen in Verbindung mit der Zeichnung. In der Zeichnung zeigen
- Fig.1: eine schematische, im Wesentlichen die funktionalen Wirkzusammenhänge anhand eines Blockschaltbilds verdeutlichende Darstellung eines erfindungsgemäßen Transmitters mit einem Anschluss an ein Signalübertragungselement,
- Fig. 2: eine schematische Darstellung eines weiteren Ausführungsbeispiels eines erfindungsgemäßen Transmitters mit einem Beispiel für das Versetzen der Übertragungseinheit in einen vorgebbaren Zustand im Fehlerfall,
- Fig. 3: eine schematische Darstellung eines zeitlichen Verlaufs eines Spannungssignals einer Übertragungseinheit des Anführungsbeispiels der Fig. 2 und
- Fig. 4: ein schematisches Flussdiagramm für eine exemplarische Ausgestaltung der Schritte des erfinderischen Verfahrens.

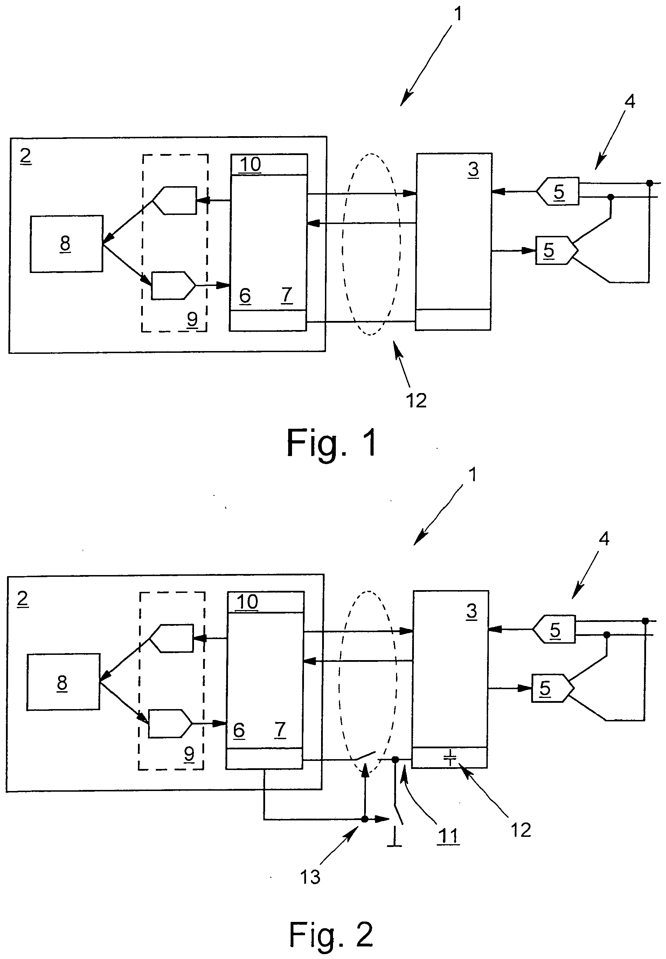

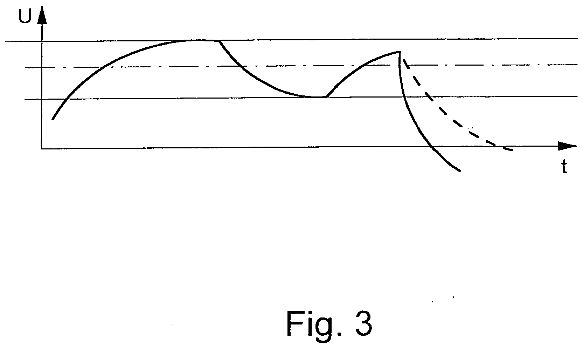

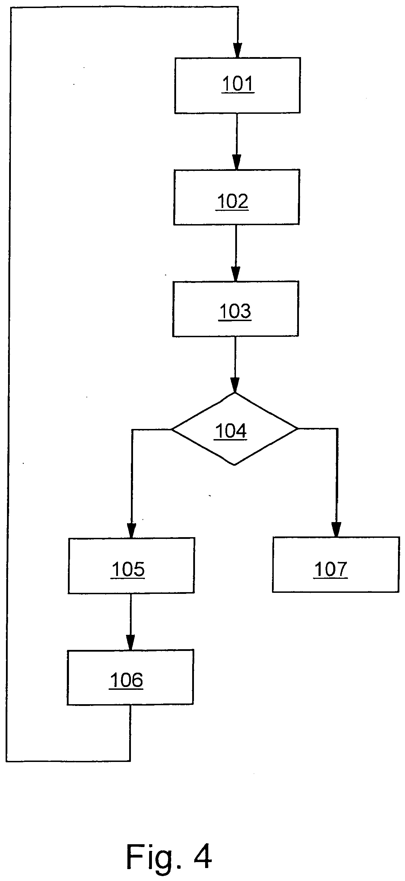

In den Fig. 1 und 2 sind jeweils verschiedene Ausführungsbeispiele eines Transmitters 1 dargestellt, wobei die Figuren keine Darstellungen im Sinne von korrekten elektrischen Schaltplänen sind, sondern vielmehr die Wirkzusammenhänge zwischen den verschiedenen Bestandteilen des Transmitters 1 erkennbar werden lassen sollen. Der in der Fig. 3 dargestellte Signalverlauf zeigt prinzipiell die möglichen Verläufe von Spannungssignalen, wie sie in Folge der Anwendung des erfindungsgemäßen Verfahrens bzw. bei einem erfindungsgemäßen Transmitter auftreten können. Der Verlauf eines Ausführungsbeispiels des Verfahrens in der Fig. 4 beschreibt grundsätzlich einen Ablauf der Schritte, wobei eine andere Gruppierung oder eine andere Aufeinanderfolge ebenfalls möglich und im Rahmen der Erfindung ist.

Die Fig. 1 zeigt im Blockschaltbild einen erfindungsgemäßen Transmitter 1, welcher hier über eine Messeinheit 2 und eine Übertragungseinheit 3 verfügt. Ausgehend von einer Messung einer physikalischen und/oder chemischen Mess- oder Prozessgröße übermittelt die Messeinheit 2 ein Messsignal an die Übertragungseinheit 3, welche das Messsignal in Form eines Ausgangssignals an ein Signalübertragungselement 4 übermittelt. Somit kann die Übertragungseinheit 3 auch als Konverter bezeichnet werden, welcher das Messsignal in ein z. B. busfähiges Ausgangssignal übersetzt oder konvertiert. Bei dem Signalübertragungselement 4 handelt es sich dabei beispielsweise um einen Teil eines Feldbusses oder um einen Zweileiter. In dem hier gezeigten Ausführungsbeispiel sind zwei Bus-Treiber 5 vorgesehen, welche jeweils zum Empfangen bzw. Senden von Signalen ausgestaltet sind. Wie hieran zu erkennen, lassen sich beim erfindungsgemäßen Transmitter 1 auch mehrere Schnittstellen oder Bestandteile für die Signalübertragung verwenden bzw. wie hier hintereinander anordnen.

Erhält die Übertragungseinheit 3 von der Messeinheit 2 ein Messsignal, so übermittelt sie dieses als Ausgangssignal beispielsweise über einen Feldbus - als ein Beispiel eines Signalübertragungselements 4 - an eine übergeordnete Einheit, die selbst nicht dargestellt ist. Hierfür verfügt die Übertragungseinheit 3 mindestens über einen Signaleingang zum Empfangen des Messsignals von der Messeinheit 2 und über einen Signalausgang zur Ausgabe des Ausgangssignals. Zudem ist bei der Übertragungseinheit 3 noch ein Signaleingang auf der Seite des Signalsübertragungselements 4 vorgesehen, durch welchen die Übertragungseinheit 3 ein Eingangssignal von dem Signalübertragungselement 4 abgreift. Mit anderen Worten: die Übertragungseinheit 3 sendet nicht nur ein Signal als Ausgangssignal an das Signalübertragungselement 4, sondern sie "hört" auch, welches Signal auf dem Signalübertragungselement 4 anliegt bzw. sie greift dieses Signal als Eingangssignal ab. Das Eingangssignal übermittelt die Übertragungseinheit 3 in Form eines Vergleichssignals an die Messeinheit 2.

In einer Ausgestaltung ist dabei das Vergleichssignal das Messsignal, welches die Übertragungseinheit 3 in ein Ausgangssignal umwandeln würde, welches im Wesentlichen identisch mit dem Eingangssignal wäre. Zudem löst die Übertragungseinheit 3 eine Messung durch die Messeinheit 2 aus. Dies geschieht in einer Ausgestaltung durch das Übertragen des Vergleichsignals. In einer weiteren Ausgestaltung werden das Auslösen der Messung und das Übertragen des Vergleichsignals unabhängig voneinander durch die Übertragungseinheit 3 durchgeführt.

Die Messeinheit 2 verfügt über eine Sende- und Empfangseinheit 6 für Signale und über eine Vergleichseinheit 7, welche dem Vergleich zwischen dem Vergleichsignal und einem abgespeicherten Signal dient. In der hier gezeigten Ausgestaltung sind eine Sende- und Empfangseinheit 6 und die Vergleichseinheit 7 in einer Komponente zusammengefasst. Es können jedoch auch getrennte Einheiten vorgesehen sein. Für die eigentliche Messung verfügt die Messeinheit 2 über eine Sensoreinheit 8, welche beispielsweise ausgehend von der zu messenden Messgröße (z.B. Durchfluss, Druck, Füllstand, pH-Wert, elektrische Leitfähigkeit etc.) ein Rohsignal erzeugt, welches wiederum von einer Schnittstelle 9 zum Senden und Empfangen von Signalen in das Messsignal umgewandelt wird.

Erhält die Messeinheit 2 von der Übertragungseinheit 3 den Auftrag zur Durchführung einer Messung und das Vergleichssignal, so wird in der in der Abbildung gezeigten Ausgestaltung von der Vergleichseinheit 7 das Vergleichssignal mit einem Signal verglichen, welches in einer Speichereinheit 10 abgelegt worden ist, die in der hier gezeigten Ausgestaltung ein Bestandteil der Messeinheit 2 ist. Bei dem abgespeicherten Signal handelt es sich dabei insbesondere um das Messsignal der der aktuellen Messung vorhergehenden Ermittlung der Messgröße. Stimmen das Vergleichssignal und das abgespeicherte Signal innerhalb einer gewissen Toleranzbreite miteinander überein, so bedeutet dies, dass das Messsignal der vorhergehenden Messung und das Signal, welches an dem Signalübertragungselement 4 anliegt und welches als Eingangssignal abgegriffen worden ist und welches auch mit dem Messsignal der vorhergehenden Messung übereinstimmen sollte, zueinander passen. Mit anderen Worten: bei der vorhergehenden Messung ist das Messsignal richtig an das Signalübertragungselement 4 als Ausgangssignal übertragen worden, und das Ausgangssignal ließ sich als Eingangssignal wieder einlesen. Dabei trägt insbesondere das Eingangssignal noch die gleiche Information wie das Ausgangssignal bzw. ist vorzugsweise mit diesem identisch.

Ist das Vergleichsergebnis positiv, so wird das aktuelle Messsignal an die Übertragungseinheit 3 übergeben und das aktuelle Messsignal wird in der Speichereinheit 10 abgelegt, um für die nächste Messung bzw. für die nächste Fehlerüberwachung zur Verfügung zu stehen. Fällt der Vergleich zwischen dem abgespeicherten Signal und dem Vergleichssignal negativ aus, so übermittelt die Messeinheit 2 an die Übertragungseinheit 3 entweder ein Fehlersignal oder sie überführt die Übertragungseinheit 3 in einen vorgebbaren - vorzugsweise sicheren - Zustand, d. h. in dieser zweiten Variante wirkt die Messeinheit 2 auf die Übertragungseinheit 3 ein. Vorteilhaft an der Ausgestaltung ist, dass keine zusätzlichen Komponenten vorgesehen sein müssen, sondern dass die Messeinheit 2 selbst überwacht, ob ihr Messsignal richtig weitergereicht worden ist. Zwischen der Messeinheit 2 und der Übertragungseinheit 3 besteht zusätzlich noch eine Verbindungsleitung 11, über welche die Energieversorgung der Messeinheit 2 durch die Übertragungseinheit 3 realisiert wird. Details hierzu bzw. eine Ausführungsvariante finden sich in der folgenden Fig. 2 bzw. in deren Beschreibung.

In der Fig. 2 ist eine Umsetzung gezeigt, die es der Messeinheit 2 erlaubt, im Falle eines Fehlers, d. h. in dem Fall, dass das Vergleichssignal nicht zu dem abgespeicherten Signal passt, die Übertragungseinheit 3 in einen abgesicherten Zustand zu versetzen. Für die Übersichtlichkeit sind gleiche Elemente mit den gleichen Bezugszeichen wie in der Fig. 1 versehen. Die Übertragungseinheit 3 verfügt in dieser Ausgestaltung über einen Energiespeicher, welcher hier durch einen Kondensator 12 symbolisiert ist. Für das Versetzen in den vorgebbaren Zustand ist die Messeinheit 2 mit einem Schalter 13 verbunden, welcher auf die Verbindungsleitung 11 einwirkt. Im Normalfall, d. h. im Zustand ohne Fehler, ist die Verbindungsleitung 11 geschlossen und die Übertragungseinheit 3 versorgt die Messeinheit 2 mit Energie. Im Fehlerfall, d. h. bei einem negativen Vergleichsergebnis, öffnet der Schalter 13 die Verbindung zwischen der Übertragungseinheit 3 und Messeinheit 2 und verbindet den Kondensator 12 der Übertragungseinheit 3 mit Masse und entlädt ihn somit. Dadurch wird zum einen elektrische Energie von der Übertragungseinheit 3 abgezogen und zum anderen ergibt sich - wie anhand der Fig. 3 gezeigt wird - ein auch außerhalb des Transmitters 1 gut erkennbares Zeichen dafür, dass ein Fehler vorliegt.

Das Entladeverhalten des Kondensators 12 der Übertragungseinheit 3 der Fig. 2 für den Normal- bzw. den Fehlerfall zeigt schematisch die Fig. 3. Zu sehen ist in der Fig. 3 ein zeitlicher Verlauf einer Spannung U. Zunächst findet sich - als ein Beispiel für den Normalfall als Abwesenheit von einem von der Messeinheit festgestellten Fehler - ein übliches Verhalten der Spannung an einem Kondensator beim Laden und Entladen. Daran schließt sich hier ein zweites Anwachsen der Spannung an, wobei das lokale Maximum der Spannung kleiner ist als beim ersten Ladevorgang. Gleichwohl würde das normale Abnehmen der Spannung - hier durch die gestrichelte Linie angedeutet - passend zum vorhergehenden Entladen stattfinden. D. h. die Konstanten für beide Entladevorgänge sind im Wesentlichen identisch, und eine z. B. dem Transmitter nach- oder übergeordnete Ladungsüberwachungseinheit detektiert anhand des Spannungsverlaufs nichts Auffälliges.

Die durchgezogene Linie entspricht dem Fall, dass der Vergleich zwischen dem abgespeicherten Signal und dem Vergleichssignal in der Messeinheit negativ ausgefallen ist und dass die Messeinheit derartig auf die Verbindungsleitung zur Übertragungseinheit eingewirkt hat, dass der als Beispiel genannte Kondensator gegen Masse entladen wurde. Hieraus ergibt sich ein deutlich steileres Entladeverhalten, welches von einer Einheit zur Überwachung des Ladezustands der Übertragungseinheit, welche beispielsweise in der Übertragungseinheit selbst oder in einer dem Transmitter über- oder nachgeordneten Einheit angeordnet ist, deutlich zu erkennen ist und somit auch zu einer entsprechenden Fehlersignalisierung des Transmitters führt.

Die Fig. 4 zeigt schematisch ein Flussdiagramm einer Ausgestaltung des erfindungsgemäßen Verfahrens. In einem ersten Schritt 101 greift die Übertragungseinheit von dem Signalübertragungselement das Eingangssignal ab. In dem nächsten Schritt 102 übermittelt die Übertragungseinheit das Vergleichssignal, welches von dem Eingangssignal abhängig ist, an die Messeinheit und veranlasst - hier gleichzeitig - die Ermittlung der Messgröße durch die Messeinheit. Die Messeinheit nimmt in Schritt 103 die Messung vor und erzeugt dadurch ein Messsignal. Im Schritt 104 findet in der Messeinheit der Vergleich statt zwischen dem Vergleichssignal der Übertragungseinheit und dem abgespeicherten Signal. Ist das Vergleichsergebnis positiv, so wird im Schritt 105 das Messsignal für die nächste Messung abgespeichert und das Messsignal wird an die Übertragungseinheit übermittelt. Im Schritt 106 gibt die Übertragungseinheit das Messsignal als Ausgangssignal an das Signalübertragungselement, und der Schritt 101 schließt sich für die nächste Messung an. Ist das Vergleichsergebnis aus Schritt 104 jedoch negativ, so versetzt im Schritt 107 die Messeinheit die Übertragungseinheit in den vorgebbaren Zustand. In einer alternativen Ausgestaltung findet nach dem Schritt 102 in der Messeinheit zunächst der Vergleich statt und die Messung wird dabei auch nur dann ausgeführt, wenn der Vergleich positiv ausgefallen ist, d. h. nur dann, wenn es auch durch den fehlerlosen Zustand sinnvoll ist, über ein Messsignal zu verfügen.

## Patentansprüche

1. Verfahren zur Überwachung eines Transmitters (1), wobei der Transmitter (1) mindestens eine Messeinheit (2) und eine Übertragungseinheit (3) umfasst, wobei die Messeinheit (2) und die Übertragungseinheit (3) zumindest zur Übertragung von Signalen miteinander verbunden sind, wobei die Messeinheit (2) dazu dient, mindestens eine Messgröße zu ermitteln und ein davon abhängiges Messsignal zu erzeugen, und wobei die Übertragungseinheit (3) von der Messeinheit (2) das Messsignal empfängt und dazu dient, ausgehend von dem Messsignal ein Ausgangssignal an mindestens ein Signalübertragungselement (4) zu übergeben,
**dadurch gekennzeichnet,**
**dass** von der Übertragungseinheit (3) von dem Signalübertragungselement (4) ein Eingangssignal abgenommen wird, dass von der Übertragungseinheit (3) eine Ermittlung der Messgröße durch die Messeinheit (2) veranlasst wird, dass die Übertragungseinheit (3) an die Messeinheit (2) mindestens ein mit dem Eingangssignal korrespondierendes Vergleichssignal übermittelt, dass von der Messeinheit (2) durch Vergleich des Vergleichssignals mit einem abgespeicherten Signal ein Vergleichsergebnis ermittelt wird, und dass von der Messeinheit (2) in Abhängigkeit von dem Vergleichsergebnis bei einem positiven Vergleichsergebnis das in Folge der Ermittlung der Messgröße erzeugte Messsignal an die Übertragungseinheit (3) übermittelt wird und bei einem negativen Vergleichsergebnis die Übertragungseinheit (3) in einen vorgebbaren Zustand versetzt wird.

2. Verfahren nach Anspruch 1, **dadurch gekennzeichnet, dass** von der Messeinheit (2) das erzeugte Messsignal an die Übertragungseinheit (3) übermittelt und das Messsignal abspeichert wird, wenn das Vergleichsergebnis darin besteht, dass das Vergleichssignal und das abgespeicherte Signal innerhalb eines vorgebbaren Toleranzbereichs liegen.

3. Verfahren nach Anspruch 1 oder 2, **dadurch gekennzeichnet, dass** von der Messeinheit (2) die Übertragungseinheit (3) in einen vorgebbaren Zustand versetzt wird, indem von der Messeinheit (2) auf eine Verbindungsleitung (11) eingewirkt wird, welche einer Energieversorgung der Messeinheit (2) durch die Übertragungseinheit (3) dient, und dass über die Verbindungsleitung (11) der Ladezustand der Übertragungseinheit (3) so beeinflusst wird, dass eine Ladezustandsüberwachung der Übertragungseinheit (3) einen Ladezustandsfehler detektiert.

4. Transmitter (1), wobei der Transmitter (1) mindestens eine Messeinheit (2) und eine Übertragungseinheit (3) umfasst, wobei die Messeinheit (2) und die Übertragungseinheit (3) zumindest zur Übertragung von Signalen miteinander verbunden sind, wobei die Messeinheit (2) dazu dient, mindestens eine Messgröße zu ermitteln und ein davon abhängiges Messsignal zu erzeugen, und wobei die Übertragungseinheit (3) von der Messeinheit (2) das Messsignal empfängt und dazu dient, ausgehend von dem Messsignal ein Ausgangssignal an mindestens ein Signalübertragungselement (4) zu übergeben,
**dadurch gekennzeichnet,**
**dass** die Übertragungseinheit (3) zum Übertragen von elektrischen Ausgangssignalen an das Signalübertragungselement (4) und zur Abnahme von elektrischen Eingangssignalen von dem Signalübertragungselement (4) ausgestaltet ist, dass die Übertragungseinheit (3) und die Messeinheit (2) derartig ausgestaltet und aufeinander abgestimmt sind, dass die Übertragungseinheit (3) eine Ermittlung der Messgröße durch die Messeinheit (2) veranlasst und dass die Übertragungseinheit (3) an die Messeinheit (2) mindestens ein von dem Eingangssignal abhängiges Vergleichssignal übermittelt, dass die Messeinheit (2) zum Übertragen des Messsignals an die Übertragungseinheit (3) und zum Empfangen des Vergleichssignals von der Übertragungseinheit (3) ausgestaltet ist, dass die Messeinheit (2) mindestens eine Vergleichseinheit (7) aufweist, dass die Vergleichseinheit (7) durch Vergleich des Vergleichssignals mit einem in einer Speichereinheit (10) abgespeicherten Signal ein Vergleichsergebnis ermittelt, und dass die Übertragungseinheit (3) und die Messeinheit (2) derartig ausgestaltet und aufeinander abgestimmt sind, dass die Messeinheit (2) in Abhängigkeit von dem Vergleichsergebnis bei einem positiven Vergleichsergebnis das in Folge der Ermittlung der Messgröße erzeugte Messsignal an die Übertragungseinheit (3) übermittelt und bei einem negativen Vergleichsergebnis die Übertragungseinheit (3) in einen vorgebbaren Zustand versetzt.

5. Transmitter (1) nach Anspruch 4, **dadurch gekennzeichnet, dass** die Messeinheit (2) mindestens eine Sensoreinheit (8) und die Speichereinheit (10) aufweist.

6. Transmitter (1) nach Anspruch 4 oder 5, **dadurch gekennzeichnet, dass** mindestens eine Verbindungsleitung (11) zur Übertragung von Energie zwischen der Messeinheit (2) und der Übertragungseinheit (3) besteht und dass die Messeinheit (2) die Übertragungseinheit (3) in einen vorgebbaren Zustand versetzt, indem die Messeinheit (2) auf die Verbindungsleitung (11) zur Übertragung von Energie einwirkt.

## Claims

1. A method for monitoring a transmitter (1), wherein the transmitter (1) comprises at least one measurement unit (2) and one transmission unit (3), wherein the measurement unit (2) and the transmission unit (3) are interconnected at least for transmission of signals, wherein the measurement unit (2) is used to determine at least one measurement quantity and to produce a measurement signal which is dependent on it, and wherein the transmission unit (3) receives the measurement signal from the measurement unit (2) and is used to transfer an output signal to at least one signal transmission element (4) based on the measurement signal
**characterized in**
**that** from the transmission unit (3) an input signal is taken from the signal transmission element (4), that a determination of the measurement quantity by the measurement unit (2) is induced from the transmission unit (3), that the transmission unit (3) transfers to the measurement unit (2) at least one comparison signal which corresponds to the input signal, that from the measurement unit (2) by comparison of the comparison signal with a stored signal a comparison result is determined, and that depending on the comparison result, the measurement signal which has been generated following the determination of the measurement quantity is transferred from the measurement unit (2) to the transmission unit (3) in the case of a positive result, and, in the case of a negative result, the transmission unit (3) is shifted into a definable state.

2. The method according to claim 1, **characterized in that** the generated measurement signal is transferred from the measurement unit (2) to the transmission unit (3) and the measurement signal is stored when the comparison result consists of the comparison signal and the stored signal being within a definable tolerance range.

3. The method according to claim 1 or 2, **characterized in that** the transmission unit (3) is shifted into a definable state by the measurement unit (2) **in that** the measurement unit (2) acts on a connecting line (11) which is used for power supply to the measurement unit (2) by the transmission unit (3), and that, via the connecting line (11), the charging state of the transmission unit (3) is influenced such that monitoring of the charging state of the transmission unit (3) detects a charging state error.

4. A transmitter (1), wherein the transmitter (1) comprises at least one measurement unit (2) and one transmission unit (3), wherein the measurement unit (2) and the transmission unit (3) are interconnected at least for transmission of signals, wherein the measurement unit (2) is used to determine at least one measurement quantity and to produce a measurement signal which is dependent on it, and wherein the transmission unit (3) receives the measurement signal from the measurement unit (2) and is used to transfer an output signal to at least one signal transmission element (4) based on the measurement signal,
**characterized in**
**that** the transmission unit (3) is designed for transmitting the electrical output signals to the signal transmission element (4) and for taking electrical input signals from the signal transmission element (4), that the transmission unit (3) and the measurement unit (2) are made and matched to one another such that the transmission unit (3) induces a determination of the measurement quantity by the measurement unit (2) and that the transmission unit (3) transfers at least one comparison signal which is dependent on the input signal to the measurement unit (2), that the measurement unit (2) is designed to transmit the measurement signal to the transmission unit (3) and to receive the comparison signal from the transmission unit (3), that the measurement unit (2) has at least one comparison unit (7), that the comparison unit (7) by comparison of the comparison signal to a signal stored in a storage unit (10) determines a comparison result and that the transmission unit (3) and the measurement unit (2) are designed and matched to one another such that depending on the comparison result the measurement unit (2) transfers the measurement signal generated following the determination of the measurement quantity to the transmission unit (3) in the case of a positive result, and, in the case of a negative result, shifts the transmission unit (3) into a definable state.

5. The transmitter (1) according to claim 4, **characterized in that** the measurement unit (2) has at least one sensor unit (8) and the storage unit (10).

6. The transmitter (1) according to claim 4 or 5, **characterized in that** there is at least one connecting line (11) for transmitting energy between the measurement unit (2) and the transmission unit (3), and that the measurement unit (2) shifts the transmission unit (3) into a definable state **in that** the measurement unit (2) acts on the connecting line (11) for transmission of energy.

## Revendications

1. Procédé destiné à la surveillance d'un émetteur (1), dans lequel l'émetteur (1) comprend au moins une unité de mesure (2) et une unité de transmission (3), dans lequel l'unité de mesure (2) et l'unité de transmission (3) sont reliées l'une à l'autre pour au moins la transmission de signaux, dans lequel l'unité de mesure (2) sert à déterminer au moins une grandeur de mesure et à générer un signal de mesure dépendant de celle-ci, et dans lequel l'unité de transmission (3) reçoit le signal de mesure en provenance de l'unité de mesure (2) et sert à transférer, à partir du signal de mesure, un signal de sortie à au moins un élément de transmission de signal (4),
**caractérisé en ce qu'**un signal d'entrée est prélevé sur l'unité de transmission (3) par l'élément de transmission de signal (4), **en ce qu'**une détermination de la grandeur de mesure est déclenchée par l'unité de transmission (3) au moyen de l'unité de mesure (2), **en ce que** l'unité de transmission (3) transmet à l'unité de mesure (2) au moins un signal de comparaison correspondant au signal d'entrée, **en ce qu'**un résultat de comparaison est déterminé par l'unité de mesure (2) en comparant le signal de comparaison à un signal mémorisé, et **en ce que** l'unité de mesure (2), en fonction du résultat de comparaison, transmet à l'unité de transmission (3) le signal de mesure généré suite à la détermination de la grandeur de mesure, lorsque le résultat de comparaison est positif, et fait passer l'unité de transmission (3) dans un état pouvant être prédéterminé, lorsque le résultat de comparaison est négatif.

2. Procédé selon la revendication 1, **caractérisé en ce que** le signal de mesure généré est transmis par l'unité de mesure (2) à l'unité de transmission (3) lorsque le résultat de comparaison indique que le signal de comparaison et le signal mémorisé se situent à l'intérieur d'une plage de tolérance pouvant être prédéterminée.

3. Procédé selon la revendication 1 ou 2, **caractérisé en ce que** l'unité de transmission (3) est amenée par l'unité de mesure (2) à passer dans un état pouvant être prédéterminé, dans lequel l'unité de mesure (2) agit sur une ligne de connexion (11) qui sert à alimenter en énergie l'unité de mesure (2) par l'intermédiaire de l'unité de transmission (3), et **en ce que** l'état de charge de l'unité de transmission (3) est influencé par l'intermédiaire de la ligne de connexion (11) de manière à ce qu'une surveillance de l'état de charge de l'unité de transmission (3) détecte une erreur d'état de charge.

4. Émetteur (1), dans lequel l'émetteur (1) comprend au moins une unité de mesure (2) et une unité de transmission (3), dans lequel l'unité de mesure (2) est l'unité de transmission (3) sont reliées l'une à l'autre au moins pour la transmission de signaux, dans lequel l'unité de mesure (2) sert à déterminer au moins une grandeur de mesure et à générer un signal de mesure en fonction de celle-ci, et dans lequel l'unité de transmission (3) reçoit le signal de mesure en provenance de l'unité de mesure (2) et sert à transférer, à partir du signal de mesure, un signal de sortie à au moins un élément de transmission de signal (4),
**caractérisé en ce que** l'unité de transmission (3) est conçu pour transmettre des signaux de sortie électriques à l'élément de transmission de signal (4) et pour prélever des signaux d'entrée électriques sur l'élément de transmission de signal (4), **en ce que** l'unité de transmission (3) et l'unité de mesure (2) sont conçues et sont adaptées l'une à l'autre de manière à ce que l'unité de transmission (3) déclenche la détermination de la grandeur de mesure au moyen de l'unité de mesure (2) et **en ce que** l'unité de transmission (3) transmet à l'unité de mesure (2) au moins un signal de comparaison dépendant du signal d'entrée, **en ce que** l'unité de mesure (2) est conçue pour transmettre le signal de mesure à l'unité de transmission (3) et pour recevoir le signal de comparaison en provenance de l'unité de transmission (3), **en ce que** l'unité de mesure (2) comporte au moins une unité de comparaison (7), **en ce que** l'unité de comparaison (7) détermine un résultat de comparaison en comparant le signal de comparaison à un signal mémorisé dans une unité à mémoire (10), et **en ce que** l'unité de transmission (3) et l'unité de mesure (2) sont conçues et adaptées l'une à l'autre de manière à ce que l'unité de mesure (2), en fonction du résultat de comparaison, transmette à l'unité de transmission (3) le signal de mesure généré suite à la détermination de la grandeur de mesure, lorsque le résultat de comparaison est positif, et fasse passer l'unité de transmission (3) dans un état pouvant être prédéterminé, lorsque le résultat de comparaison est négatif.

5. Émetteur (1) selon la revendication 4, **caractérisé en ce que** l'unité de mesure (2) comporte au moins une unité à capteur (8) et l'unité à mémoire (10).

6. Émetteur (1) selon la revendication 4 ou 5, **caractérisé en ce qu'**il est prévu au moins une ligne de connexion (11) destinée à la transmission d'énergie entre l'unité de mesure (2) et l'unité de transmission (3) et **en ce que** l'unité de mesure (2) fait passer l'unité de transmission (3) dans un état pouvant être prédéterminé, dans lequel l'unité de mesure (2) agit sur la ligne de connexion (11) destinée à la transmission d'énergie.
